# NEW EUROPEAN PATENT SPECIFICATION

(11) **EP 2 063 110 B2**
(45) Date of publication and mention of the opposition decision: **12.06.2019**
(45) Mention of the grant of the patent: 12.08.2015
(21) Application number: 07022879.6
(22) Date of filing: 26.11.2007
(51) Int. Cl.: F03D 7/02, F03D 7/04

(54) **Method of damping tower vibrations of a wind turbine and inclination control system**
Verfahren zur Dämpfung der Leistungsvibrationen einer Windturbine und Neigungssteuerungssystem
Procédé d'amortissement des vibrations de puissance d'une éolienne et système de commande d'inclinaison

(43) Date of publication of application: 27.05.2009
(73) Proprietor: Siemens Aktiengesellschaft, 80333 München (DE)
(72) Inventor: Egedal, Per, 7400 Herning (DK)

(56) References cited:
- EP-A- 1 719 910
- WO-A-02/075153
- WO-A-2007/053031
- WO-A-2007/089136
- WO-A1-02/075153
- WO-A1-2007/010332
- GB-A- 2 117 934
- US-A1- 2006 033 338
- US-A1- 2006 066 111
- US-B2- 6 891 280
- HAU, E.: "WINDKRAFTANLAGEN", 1995, Springer -Zweiter Auflage

## Description

The present invention relates to a method of damping tower vibrations of a wind turbine which is equipped with rotor blades, a pitch controller, and a pitch actuator system, in which the tower vibrations are damped by setting the pitch of the rotor blades. In addition, the present invention relates to an inclination control system for use in a wind turbine which is equipped with rotor blades and a pitch actuator system.

In wind turbines, tower vibrations will be excited by wind conditions in the wind field acting on the wind turbine. In land based wind turbines these tower vibrations are of high frequency and produce only small tower inclinations. However, e.g. wind turbines mounted on floating foundations of the so-called spar-buoy type can have, due to wind conditions, low vibrational frequencies of the tower and large inclinations of the tower and therefore large movements of the nacelle.

A combination of low tower frequency and negative thrust curve at high wind speeds can lead to high tower loads and large inclination variations of the nacelle if the turbine is constant power controlled. In constant power control the wind turbine is usually controlled to maintain approximately a constant rotor speed and the torque of the rotor is regulated by setting an appropriate pitch angle of the turbine blades so as to maintain an approximately constant power. High tower loads and large inclination variations in this power control mode may lead to instabilities and structural failure of the wind turbine. Until now, therefore, wind turbines have not been installed on towers with very low tower frequency (below 0.05 Hz).

InUS 6,891,280 B2 a method for operating off-shore wind turbine plants based on the frequency of their towers is disclosed. In this method, it is avoided to operate the plant in a frequency range in which the resonant tower frequency lies. To achieve this, the critical natural frequency of the plant and the speed of the rotor where the plant is excited in its critical natural frequency range are determined. Then, this speed range is avoided during operation of the wind tower plant by operating above or below said critical speed range and, if necessary, by rapidly passing through the critical speed range.

A method of damping tower vibrations of a wind turbine is disclosed in WO 2007/053031 A1. In this method, tower eigenvibrations are damped by an angular increment Δβ which is added to the blade pitch angle. This increment is calculated on the basis of the tower velocities, in order to counteract the eigenvibrations.

A method for damping vibrations of a wind turbine tower is disclosed in US 2006/0066111 A1. In this method the generator demand torque is modulated by providing a signal based on changes in the generator rotor speed.

EP 1 719 910 A1 describes a wind turbine generator and an active vibration damping method for the same. To achieve active damping, a modification value δΘ* is added to a blade-pitch-angle command to arrive at a resulting command for setting a pitch angle of the windmill blades so as to generate a thrust on the windmill blades which cancels out the vibrations of the nacelle.

GB 2 117 934 A describes damping of power vibrations by use of pitch angle control. In the control method, an additional blade angle reference command which causes incremental thrust variations predicted to be in phase with the velocity of the top of the tower is used for providing additional, positive aerodynamic damping of the tower

US 2006/0033338 A1 describes a wind turbine control system comprising a wind flow estimator to predict a wind flow, a tower position and a tower velocity which are then used to calculate a desired blade pitch angle.

WO 02/075153 A1 describes a method and a device for monitoring tower oscillations. It is mentioned that the pitch angle of the rotor blade can be changed if the tower oscillation exceeds a given limit.

WO 2007/089136 A2 describes a method for damping the vibrations of a wind turbine tower in which the pitch of the rotor blade is changed. When the tower is deflecting upstream, the blade pitch is changed towards stall, and when the tower is moving downstream the blade pitch is changed away from stall. In case a maximum acceleration at maximum downstream tower deflection exceeds a predetermined level damping pitch control is triggered and the pitch control for regulating the maximum power output is disabled or overridden.

With respect to the mentioned state of the art it is a first objective of the present invention to provide an improved method of damping tower vibrations of a wind turbine. It is a second objective of the present invention to provide an improved inclination control system for use in a wind turbine.

The first objective is solved by a method of damping tower vibrations of a wind turbine as claimed in claim 1, and the second objective is solved by an inclination control system for use in a wind turbine as claimed in claim 13. The depending claims contain further developments of the invention.

In the inventive method of damping tower vibrations of a wind turbine which is equipped with rotor blades, a pitch controller, and a pitch actuator system, the damping is done by setting the pitch of the rotor blades. The pitch angle of the rotor blades is controlled according to a pitch reference value which represents a pitch to be set by the pitch actuating system. Determining the pitch reference value is done in the following way: A speed reference value for the rotor speed and a rotor speed value representing the actual speed of the rotor are provided. A modification value representing a modification to be done for taking into account the tower vibrations, in particular the tower vibrations at the tower top, for example, at the location of the nacelle, is provided. The modification value is then used to modify the speed reference value to establish a modified speed reference value. The pitch reference value is then determined on the basis of at least the difference between the modified speed reference value and the actual rotor speed value.

While in the state of the art the pitch angle is calculated based on the difference between an unmodified speed reference value and the actual rotor speed value, and a modification is done to the pitch angle for damping tower vibrations, in the present invention the speed reference value is modified instead of the pitch angle. This allows for damping very slow tower frequencies which is not easily possible with the state of the art.

The modification value by which the speed reference value is modified represents the tower velocity caused by the tower vibrations, in particular by the tower vibrations at the tower top, for example at the location of the nacelle. The tower velocity value is then added to the speed reference value to establish the modified speed reference value. While in the state of the art the tower speed is incorporated into the pitch angle, it is incorporated into the speed reference value instead in the present implementation of the invention.

The tower velocity value may, for example, be calculated from an inclination value representing the inclination of the tower caused by the tower vibrations. Differentiating the inclination value easily leads to the tower velocity value. This inclination may for example be measured in the nacelle or at the nacelle of the wind turbine.

In a further development of the inventive method a fore-aft acceleration value, which represents the tower acceleration in the direction of the rotor axis and which is caused by the tower vibrations, is used to represent the inclination value. Establishing the change of inclination by use of this fore-aft acceleration value may be done by forming the derivative of the ratio of the fore-aft acceleration value to the gravity acceleration acting on the tower top. Even large inclination angles of the tower are relatively small compared to an angle of 90°. Therefore, the ratio of the fore-aft acceleration value to the gravity acceleration can be approximated by the inclination angle expressed in radiant, rather than the sine of the inclination angle. In other words, the fore-aft acceleration is approximately proportional to the inclination angle expressed in radiant for small angles. This offers the possibility to measure the inclination simply by using accelerometers at the tower top, for example at or in the nacelle.

For discarding contributions to the inclination value which are not caused by tower vibrations and which are usually higher in frequency than those contributions caused by tower vibrations the derivative of the inclination value may be filtered by a low-pass filter.

In a further development of the inventive method, the pitch reference value is determined on the basis of the modified speed reference value by establishing a speed difference value representing the difference between the rotor speed value and the modified speed reference value, calculating a an inclination reference value for the tower, in particular for the tower top, for example for the nacelle, from the speed difference value, establishing an inclination difference value representing the difference between the inclination value and the inclination reference value, and determining the pitch reference value on the basis of inclination difference value. By determining the pitch reference value on the basis of the inclination difference value the inclination of the tower top can be counteracted by setting the pitch angle such as to reduce this difference. Furthermore, as the speed reference value is already modified so as to take into account the tower vibrations, not only the inclination is reduced but also the vibrations are damped, leading to a damping of fluctuations in the inclination value over time which in turn leads to damping the fluctuations in the inclination difference value. Hence, a rapid damping of the tower inclination can be achieved, which gives a more direct control of the tower movements and therefore makes it possible to get a stable control loop while having very low tower frequencies.

For calculating the inclination reference value from the speed difference value, a PID-controller (proportional integral differential controller) may be used. Such a controller may also be used for calculating the pitch reference value from the inclination difference value.

In a special embodiment of the inventive method the inclination reference value may be clamped to a given value. By this method it becomes possible to avoid large tower movements caused by wave loads from the sea. Such a given value may, for example depend on the wind speed.

Furthermore, the inventive method may be deactivated in case of very high wind speeds. This offers the opportunity to determine the pitch reference value on the speed reference value alone in order to avoid overspeed at high wind speeds.

In addition to the described method, the tower speed or the derived inclination could also be fed into the speed reference for a power controller in order to damp tower movements if the wind turbine runs below rated power. Furthermore it could be fed into the speed in a power/speed table which is used at speed below rated power for looking up a speed for a certain power.

An inventive inclination control system for use in a wind turbine which is equipped with rotor blades and a pitch actuator system comprises a pitch control unit, a rotor speed input, a speed reference input, an inclination signal input, a pitch reference output, and a modification unit. The pitch control unit is designed to establish a pitch reference signal representing a pitch to be set by the pitch actuator system. The rotor speed input and the speed reference input are designed for receiving a rotor speed signal representing the actual rotor speed and a speed reference signal for the rotor speed, respectively. The inclination signal input is designed for receiving a signal representing an inclination of the tower. The inclination signal can, in particular, represent the inclination at the tower top and can contain either a direct inclination value or a value from which the inclination can be derived. The pitch reference output is designed for outputting the pitch reference signal. The modification unit is connected to the speed reference input for receiving the speed reference signal and to the inclination signal input for receiving the inclination signal. It is designed to establish a modification signal on the basis of the inclination signal, to modify the speed reference signal by means of the modification signal, and to output a modified speed reference signal. The pitch control unit is connected to the modification unit to receive the modified speed reference signal and is designed to establish the pitch reference value on the basis of at least the modified speed reference signal.

Modifying the speed reference signal allows for rapidly reducing oscillations in the rotor speed and, as a consequence, the tower movements. The inventive inclination control system allows for performing the inventive method and achieves the advantages associated with the inventive method.

In the inventive inclination control system, the modification unit is designed to establish, as the modification signal, a tower velocity signal on the basis of a signal representing an inclination of the tower. It is further designed to modify the speed reference signal by means of the tower speed signal and to output the modified speed reference signal.

In a special implementation, the modification unit comprises a differentiator for differentiating the signal representing an inclination of the tower. In addition, the modification unit is designed to establish the tower velocity signal on the basis of the differentiated signal. In this special implementation, the modification unit further comprises an adder which is connected to the speed reference input for receiving the speed reference signal and designed to add the tower velocity signal to the speed reference input for establishing the modified speed reference signal. Hence, the modified speed reference signal is the sum of the speed reference signal and the tower velocity signal. Since the tower velocity is oscillating due to the vibrations this sum represents an oscillating speed reference for the pitch controller. By use of this oscillating speed reference the difference between the (oscillating) actual rotor speed and the oscillating speed reference can be reduced in a control process. By this measure it becomes possible to rapidly damp oscillations in the rotor speed.

An effective damping of the tower inclination can be achieved by the special implementation if it further comprises a first subtraction unit which is connected to the modification unit for receiving the modified speed reference signal and to the rotor speed input for receiving the rotor speed signal, and which is designed to establish a speed difference signal representing the difference between the rotor speed signal and the modified speed reference signal. Moreover, the pitch control unit comprises a speed controller, a second subtraction unit, and an inclination controller. The speed controller is connected to the first subtraction unit for receiving the speed difference signal and designed to establish and to output an inclination reference signal based on the received speed difference signal. The second subtraction unit is connected to the speed controller for receiving the inclination reference signal and connected to the inclination signal input for receiving the inclination signal. It is designed to establish the difference between the inclination reference signal and the inclination signal, and to output an inclination difference signal. The inclination controller is connected to the second subtraction unit for receiving the inclination difference signal and designed to establish the pitch reference signal on the basis of the received inclination signal. In this development of the inclination control system the speed controller calculates an oscillating inclination reference signal on the basis of the oscillating speed reference from which then the actual (oscillating) inclinations are subtracted. The subtraction result is fed into the inclination controller which determines a pitch reference signal on the basis of the subtraction result so as to reduce the difference. By this measure the difference between the inclination reference signal and the actual inclination can be reduced rather quickly which in turn leads to an effective damping of oscillations in the tower inclination.

The speed controller and/or the inclination controller may be implemented as PID-controllers.

In order to discard contributions in the modified speed reference signal which do not result from low frequency vibrations, the modification unit of the inventive inclination control system may comprise a low-pass filter which is connected to the differentiator for receiving the differentiated signal and designed to output a filtered differentiated signal.

Further features, properties, and advantages of the present invention will become clear from the following description of an embodiment of the invention in conjunction with the accompanying drawings.
Figure 1 shows an embodiment of the inventive inclination control system in form of a block diagram.
Figure 2 shows the pitch controller of the inclination control system.
Figure 3 shows the inclination of a wind turbine tower and the accelerations acting on the nacelle of a wind turbine.
Figure 4 shows the modification unit of the inclination control system.
Figure 5 shows the time dependency of various parameters in a wind turbine with an inventive inclination control system.
Figure 6 shows the time dependency of the parameters of figure 5 for a wind turbine without an inventive inclination control system.

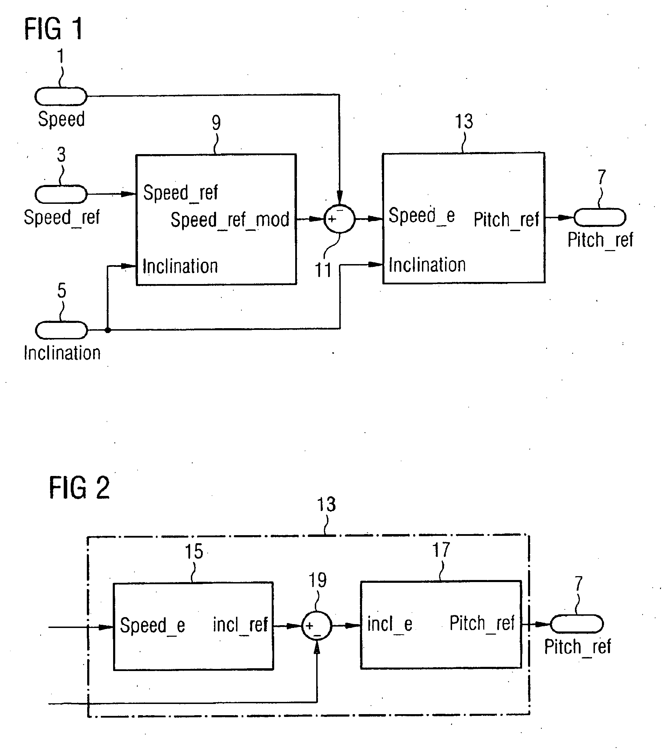

An embodiment of the inventive inclination control system is shown in figure 1. The system is to be used in a wind turbine which is equipped with rotor blades and a pitch actuator system. It comprises three inputs, namely a rotor speed input 1 which is designed for receiving a rotor speed signal representing the actual rotor speed value of the wind turbine's rotor, a speed reference input 3 which is designed for receiving a speed reference signal representing a speed reference value for the rotor speed, and an inclination signal input 5 which is designed for receiving a signal representing an inclination of the tower. The inclination control system further comprises a pitch reference output 7 which is designed to output a pitch reference signal to the pitch actuator system of the wind turbine. The pitch reference signal represents the pitch values to be set by the pitch actuator system.

A modification unit 9 is connected to the speed reference input 3 for receiving the speed reference signal and to the inclination input 5 for receiving the inclination signal. A modification signal is established in the modification unit on the basis of the received inclination signal and used to modify the speed reference signal so as to establish a modified speed reference signal. This modified speed reference signal is then output by the modification unit 9.

A subtracter 11 is connected to the modification unit 9 for receiving the modified speed reference signal and to the rotor speed input 1 for receiving the rotor speed signal representing the actual rotor speed value. It subtracts the rotor speed signal from the modified speed reference signal to establish a speed error signal (speed difference signal) which is then output.

The pitch controller 13 is, in the present embodiment, connected to the first subtracter 11 to receive the speed error signal and to the inclination input 5 to receive the inclination signal. On the basis of the received speed error signal and the received inclination signal the pitch controller establishes the pitch reference signal which represents an individual or a global pitch for each rotor blade to be set by the pitch actuating system of the wind turbine. The pitch reference signal is then output through the pitch reference output 7.

The pitch controller 13 is shown in more detail in figure 2. It comprises a speed controller 15, an inclination controller 17 and a second subtracter 19. Both the speed controller 15 and the inclination controller 17 are implemented as proportional-integral-differential controllers (PID-contollers).

The speed controller 15 is connected to the first subtracter to receive the speed error signal. The PID-controller then establishes an inclination reference signal on the basis of the received speed error signal. This inclination reference signal is the output signal of the speed controller.

The second subtracter 19 is connected to the speed controller 15 to receive the inclination reference signal and to the inclination input 5 to receive the inclination signal. It subtracts the inclination signal from the inclination reference signal and outputs an inclination error signal (inclination difference signal), which represents the difference between the inclination reference and the actual inclination of the wind turbine.

The inclination controller 17 is connected to the subtracter 19 to receive the inclination error signal. The PID-controller establishes on the basis of the received inclination error signal the pitch reference signal which is then output to the pitch actuator system through the pitch reference output 7. The pitch difference signal represent the pitch angles to be set for the rotor blades in order to reduce the difference between the inclination reference and the actual inclination.

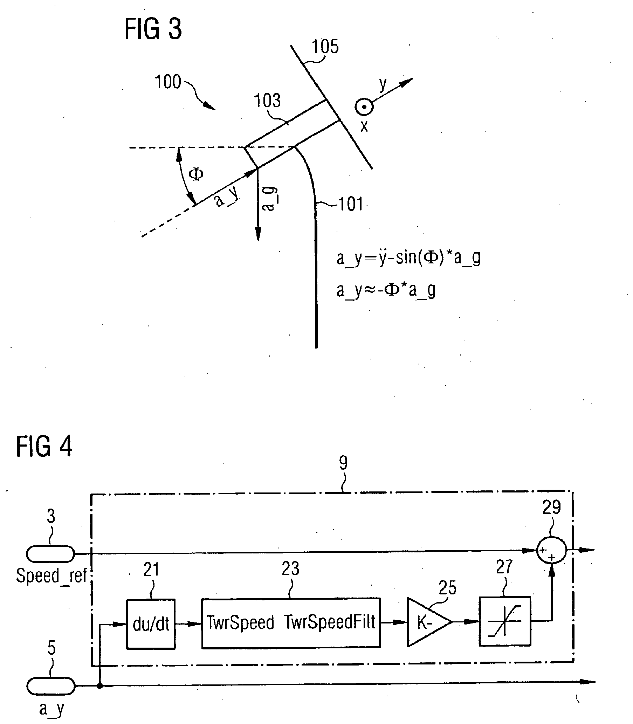

The inclination signal can be a signal which represents a direct inclination value measured by a suitable sensor. However, it is also possible to have an inclination signal which not directly represents the inclination value but a parameter which allows for deriving the inclination value from it. Such a parameter is, for example, the fore-aft acceleration of the nacelle. How to derive the inclination value from the fore-aft acceleration will now be described in conjunction with figure 3.

Figure 3 shows a wind turbine 100 with a tower 101, a nacelle 103 at the tower at the tower top and a rotor 105 the shaft of which is carried by the nacelle 103. The wind turbine 100 is subject to tower vibrations which in turn lead to an oscillating inclination Φ of the wind turbine. The oscillation also produces a fore-aft acceleration a_y of the nacelle, i.e. an acceleration of the nacelle in the direction of the rotor axis y. The inclination angle Φ is defined to be the angle between the fore-aft acceleration a_y of the nacelle 103 and the horizontal direction. In addition, gravity acceleration a-g is acting on the nacelle as well in a vertical direction.

The fore-aft acceleration a_y depends on the second time derivative of the nacelle's location in the direction of the rotor axis, dy/d²t and the sine of the inclination angle Φ multiplied by the gravity acceleration a_g, i.e. the projection of the gravity acceleration onto the dirtection of the rotor axis. Even in case of an inclination angle as large as 20°, the sine function of this angle is very well approximated by this angle itself if the angle is expressed in radiant instead of degrees. The error by replacing the sine of the inclination angle Φ by the inclination angle Φ itself in radiant is only about 2 percent for angles as large as 20°. For smaller angles the error becomes even smaller. This means that the inclination angle can be well approximated by the ratio of the fore-aft acceleration a_y to the gravity acceleration a_g. In other words, since the gravity acceleration is constant, the inclination angle can be assumed to be proportional to the fore-aft acceleration value a_y. Furthermore, it can be assumed that the acceleration dy/d²t caused by the vibrations can always be neglected compared to the projection of the gravity acceleration onto the direction of the rotor axis. Please note in this context that the projection of the gravity acceleration as well as the acceleration caused by the low frequency vibrations are the highest for the highest inclination angles Φ, and that the acceleration due to low frequency vibrations is considerably small compared to gravity acceleration. Therefore, the fore-aft acceleration value a_y can be used to represent the inclination angle Φ in the modification unit 9.

Figure 4 shows the modification unit 9 in more detail. In figure 4 it is assumed that the inclination signal is given by a fore-aft acceleration signal which represents the fore-aft acceleration value measured by, e.g., an accelerometer at or in the nacelle 103. However, the modification unit 9 would work as well with an inclination signal representing directly the inclination angle rather than the fore-aft acceleration value.

The modification unit 9 comprises a differentiator 21, a low-pass filter 23, an amplifier 25, a limiter 27, and an adder 29. The differentiator 21 is connected to the inclination input 5 for receiving the fore-aft acceleration signal. It forms the time-derivative of the fore-aft acceleration signal which then is the output signal of the differentiator. As has been explained before, the fore-aft acceleration signal can be assumed to be proportional to the inclination angle Φ. Hence, the time derivative of the fore-aft acceleration signal is also proportional to the time derivative of the inclination angle, which in turn is proportional to the tower speed. Hence, the time derivative of the fore-aft acceleration signal is a good approximation for the tower speed. Therefore, this derivative can be regarded as being a tower speed signal.

The low-pass filter 23 is connected to a differentiator 21 to receive the tower speed signal, i.e. the time derivative of the fore-aft acceleration signal. The output signal of the low-pass filter 23 is a filtered tower speed signal from which high frequency components, which are not caused by low frequency tower vibrations, are removed.

The amplifier 25 is connected to the low-pass filter 23 to receive the filtered tower speed signal. In the amplifier 25 the received tower speed signal is amplified and output as an amplified filtered tower speed signal.

The limiter 27 is connected to the amplifier 25 for receiving the filtered and amplified tower speed signal. It drives the filtered and amplified tower speed signal into saturation if a certain margin of the signal amplitude is reached. By this measure the filtered and amplified tower speed signal is prevented from becoming too large in its absolute value.

The output of the limiter 27 is the modification signal which is received by the adder 29 that is connected to the limiter 27 and to the speed reference input 3. In the adder the modification signal is added to the speed reference signal and the sum is output as the modified speed reference signal.

Although figure 4 has been described with respect to the fore-aft acceleration signal as the inclination signal, the modification unit would work with an inclination signal representing the actual inclination of the tower rather than its fore-aft acceleration, as well. In this case the differentiator would form the time derivative of the inclination angle rather than the fore-aft acceleration.

In case the fore-aft acceleration is used for representing the inclination the fore-aft acceleration may also be used in the pitch controller 13. However, it is also possible to use the inclination angle instead of the fore-aft acceleration in the modification unit 9 as well as in the pitch controller 13. It is also possible to use the inclination angle in one unit and the fore-aft acceleration in the other. However, in this case the inclination control system would need to have four inputs, namely a rotor speed input, a speed reference input, a fore-aft acceleration input and an inclination angle input. Therefore, it is preferable to use the same input signal in the modification unit 9 and in the pitch controller 13.

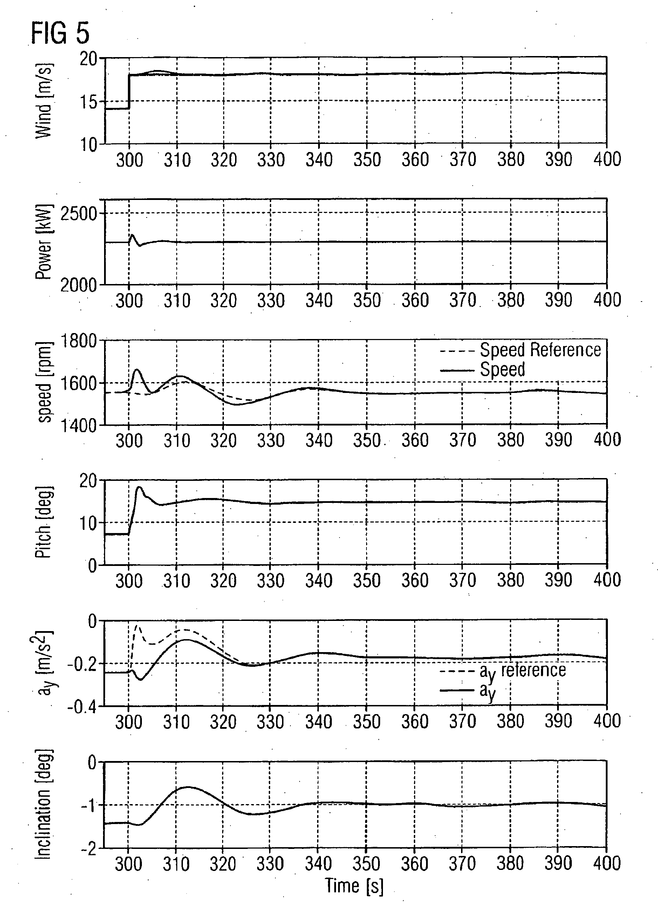

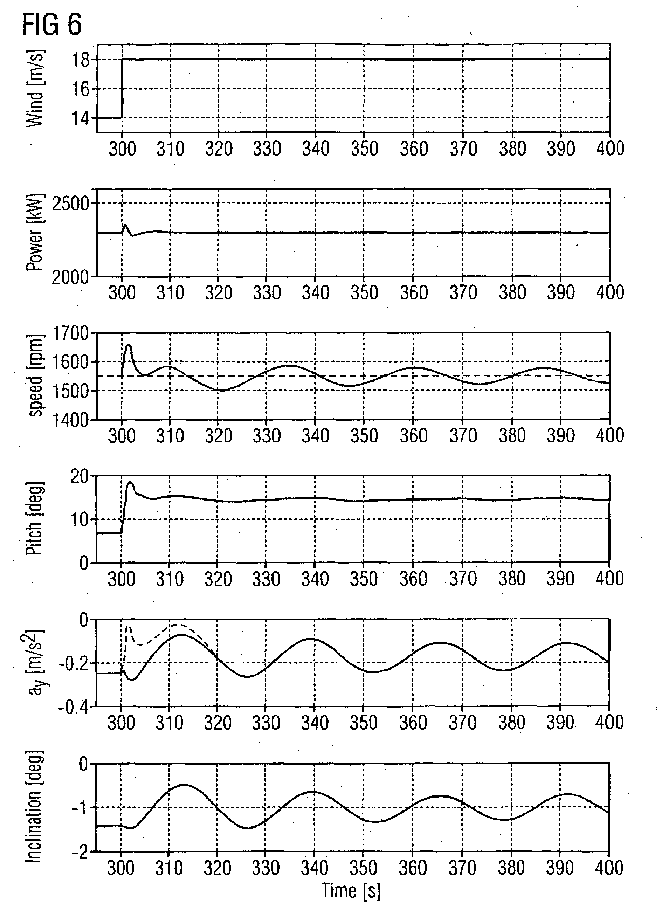

The effect of the inventive inclination control system can be seen in figures 5 and 6 which show the time behaviour of the wind speed, the output power of the wind turbine, the rotor speed, the pitch angle, the fore-aft acceleration, and the inclination for a wind turbine with an inventive inclination control system (figure 5) and without such a system (figure 6). Both figures show the reaction of the output power, the rotor speed, the pitch angle, the fore-aft acceleration, and the inclination to a wind step, i.e. to a sudden increase in the wind speed from 14 to 18 m/s. In both cases the output power of the wind turbine stays constant except for a small wobble immediately after the wind step. This constancy is due to the fact that the wind turbine is operated in rated power mode.

Due to the low frequency tower oscillation that is introduced through the wind step the rotor speed experiences oscillations. While these variations are counteracted in the inventive inclination control system through the modification signal added to the speed reference signal, no measures are taken in the wind turbine shown in figure 6. As a consequence, the speed error is controlled to become zero rather quickly with the inventive control system so that the oscillations in the rotor speed are damped while long-term stable oscillations occur in the wind turbine without the inventive control system. At the same time, the inclination reference signal, which is a fore-aft acceleration reference signal in the present case, also contains the oscillations from the modified speed reference signal. Due to the damping of the oscillations in the rotor speed the inclination error signal, i.e. the difference between the fore-aft acceleration reference and the actual fore-aft acceleration is controlled to become zero rather quickly so that, as a consequence, the amplitudes in the inclination angles are damped. On the other hand, in the wind turbine without the inventive inclination control system, the long-term stable oscillations of the rotor speed can also be seen in the fore-aft acceleration of the nacelle and, as a consequence, in the inclination angle. In other words, the low frequency oscillations are damped effectively with the inventive inclination control system while they continue almost undamped in the wind turbine without the inventive control system. Therefore, the inventive inclination control system provides a suitable measure for damping low frequency oscillations, as they, for example, would occur in wind turbines with floating foundations.

## Claims

1. A method of damping tower vibrations of a wind turbine (100) which is equipped with rotor blades, a pitch controller (13) and a pitch actuator system, by setting the pitch of the rotor blades, comprising the steps of:
- providing a speed reference value (3) for the rotor speed;
- providing a rotor speed value (1) representing the speed of the rotor (105); and
- establishing a modification value representing a modification to be done to the speed reference value (3) for taking into account the tower vibrations;
- using the modification value to modify the speed reference value (3) to establish a modified speed reference value;
- determining a pitch reference value (7) representing a pitch to be set by the pitch actuator system on the basis of at least the difference between the modified speed reference value and the rotor speed value;
- controlling the pitch angle of the rotor blades according to the pitch reference value (7),
wherein
the modification value is a tower velocity value representing the tower velocity caused by the tower vibrations and the tower velocity value is added to the speed reference value to establish the modified speed reference value.

2. The method as claimed in claim 1, in which the tower velocity value is calculated from an inclination value representing the inclination of the tower caused by the tower vibrations.

3. The method as claimed in claim 2, in which a fore-aft acceleration value representing the tower acceleration in the direction of the rotor axis caused by the tower vibrations is used to represent the inclination of the tower.

4. The method as claimed in claim 2 or claim 3, in which the pitch reference signal is determined on the basis of the modified speed reference value by
- establishing a speed difference value representing the difference between the rotor speed value and the modified speed reference value;
- calculating an inclination reference value for the tower from the speed difference value;
- establishing an inclination difference value representing the difference between the inclination value and the inclination reference value; and
- determining the pitch reference signal on the basis of the inclination difference value.

5. The method as claimed in claim 4, in which a PID controller is used for calculating the inclination reference value from the speed difference value.

6. The method as claimed in claim 4 or claim 5, in which a PID controller is used for calculating the pitch reference value from the inclination difference value.

7. The method as claimed in any one of the claims 4 to 6, in which
the inclination reference value is clamped to a given value.

8. The method as claimed in claim 7, in which the given value depends on the wind.

9. The method as claimed in claim 3 and any one of the claims 4 to 8, in which
the inclination value is derived from the fore-aft acceleration value by forming the derivative of the ratio of the fore-aft acceleration value to the gravity acceleration.

10. The method as claimed in any of the claims 2 to 9,
in which
the tower velocity value is established from a low-pass filtered derivative of the inclination value.

11. The method as claimed in any one of the claims 1 to 10, in which
method is deactivated at very high wind speeds.

12. The method as claimed in any one of the claims 1 to 11, in which
the inclination value is established on the basis of a inclination measurement or an acceleration measurement at the top of the tower.

13. An inclination control system for use in a wind turbine (100) with rotor blades and a pitch actuator system, the inclination control system comprising:
- a pitch control unit (13) which is designed to establish a pitch reference signal representing a pitch to be set by the pitch actuator system;
- a rotor speed input (1) designed for receiving a rotor speed signal representing the speed of the rotor;
- a speed reference input (3) designed for receiving a speed reference signal for the rotor speed;
- an inclination signal input (5) designed for receiving a signal representing an inclination of the tower;
- a pitch reference output (7) designed for outputting the pitch reference signal;
**characterised in**
- a modification unit (9) which is connected to the speed reference input (1) for receiving the speed reference signal and to the inclination signal input (5) for receiving the inclination signal, the modification unit (9) being designed to establish a modification signal on the basis of the inclination signal, to modify the speed reference signal by means of the modification signal, and to output a modified speed reference signal;
- that the pitch control (13) unit is connected to the modification unit (9) to receive the modified speed reference signal and designed to establish the pitch reference signal at least on the basis of the difference between the modified speed reference signal and the rotor speed signal; and
the modification unit (9) is designed to establish as the modification signal a tower velocity signal on the basis of the signal representing an inclination of the tower, to modify the speed reference signal by adding the tower velocity signal to the speed reference signal to establish the modified speed reference signal, and to output the modified speed reference signal.

14. The inclination control system as claimed in claim 13, **characterised in that**
- the modification unit (9) comprises a differentiator (21) for differentiating the signal representing an inclination of the tower; and
- the modification unit is designed to establish the tower velocity signal on the basis of the differentiated signal.

15. The inclination control system as claimed in claim 14, **characterised in that**
the modification unit comprises (9) an adder (29) which is connected to the speed reference input (3) for receiving the speed reference signal and designed to add the tower velocity signal to the speed reference signal for establishing the modified speed reference signal.

16. The inclination control system as claimed in any one of the claims 13 to 15,
**characterised in that**
- a first subtraction unit (11) which is connected to the modification unit (9) for receiving the modified speed reference signal and to the rotor speed reference input (1) for receiving the rotor speed signal, and which is designed to establish a speed difference signal representing the difference between the rotor speed signal and the modified speed reference signal;
- that the pitch control unit (13) comprises a speed controller (15), a second subtraction unit (19) and a inclination controller (17);
- that the speed controller (15) is connected to the first subtraction unit (1) for receiving the speed difference signal and designed to establish and to output an inclination reference signal based on the received speed difference signal,
- that the second subtraction unit is connected to the inclination signal input (5) for receiving the signal representing the inclination and that the second subtraction unit (19) is designed do establish the difference between the inclination reference signal and the signal representing the inclination and to output an inclination difference signal; and
- that the inclination controller (17) is connected to the second subtraction unit (19) for receiving the inclination difference signal and that the inclination controller (17) is designed to establish the pitch reference signal on the basis of the inclination difference signal

17. The inclination control system as claimed in claim 16, **characterised in that**
the speed controller (15) is a PID-controller.

18. The inclination control system as claimed in claim 16 or claim 17,
**characterised in that**
the inclination controller (17) is a PID-controller.

19. The inclination control system as claimed in claim 14 and any one of the claims 15 to 18,
**characterised in that**
- the modification unit (9) comprises a low pass filter (23) which is connected to the differentiator (21) for receiving the differentiated signal and designed to output a filtered differentiated signal.

## Patentansprüche

1. Verfahren zum Dämpfen von Turmvibrationen bei einer Windenergieanlage (100), die mit Rotorblättern, einem Pitch-Regler (13) und einem Pitch-Aktuatorsystem ausgestattet ist, durch Einstellen des Anstellwinkels der Rotorblätter, das folgende Schritte umfasst:
- Bereitstellen eines Drehzahlreferenzwerts (3) für die Rotordrehzahl,
- Bereitstellen eines Rotordrehzahlwerts (1), der für die Drehzahl des Rotors (105) steht, und
- Ermitteln eines Modifikationswerts, der eine an dem Drehzahlreferenzwert (3) vorzunehmende Modifikation darstellt, damit die Turmvibrationen berücksichtigt werden,
- Benutzen des Modifikationswerts zum Modifizieren des Drehzahlreferenzwerts (3) zum Ermitteln eines modifizierten Drehzahlreferenzwerts,
- Bestimmen eines Pitch-Referenzwerts (7), der für einen von dem Pitch-Aktuatorsystem einzustellenden Anstellwinkel steht, zumindest auf der Grundlage der Differenz zwischen dem modifizierten Drehzahlreferenzwert und dem Rotordrehzahlwert,
- Regeln des Anstellwinkels der Rotorblätter entsprechend dem Pitch-Referenzwert (7),
wobei
es sich bei dem Modifikationswert um einen Turmgeschwindigkeitswert handelt, der für die durch die Turmvibrationen verursachte Turmgeschwindigkeit steht, und der Turmgeschwindigkeitswert zum Ermitteln des modifizierten Drehzahlreferenzwerts zu dem Drehzahlreferenzwert addiert wird.

2. Verfahren nach Anspruch 1, bei dem
der Turmgeschwindigkeitswert aus einem Neigungswert berechnet wird, der für die durch die Turmvibrationen verursachte Neigung des Turms steht.

3. Verfahren nach Anspruch 2, bei dem
ein Längsbeschleunigungswert, der für die durch die Turmvibrationen verursachte Turmbeschleunigung in Richtung der Rotorachse steht, zum Darstellen der Neigung des Turms verwendet wird.

4. Verfahren nach Anspruch 2 oder 3, bei dem das Pitch-Referenzsignal auf der Grundlage des modifizierten Drehzahlreferenzwerts bestimmt wird, indem
- ein Drehzahldifferenzwert ermittelt wird, der für die Differenz zwischen dem Rotordrehzahlwert und dem modifizierten Drehzahlreferenzwert steht,
- aus dem Drehzahldifferenzwert ein Neigungsreferenzwert für den Turm berechnet wird,
- ein Neigungsdifferenzwert ermittelt wird, der für die Differenz zwischen dem Neigungswert und dem Neigungsreferenzwert steht, und
- auf der Grundlage des Neigungsdifferenzwerts das Pitch-Referenzsignal bestimmt wird.

5. Verfahren nach Anspruch 4, bei dem
ein PID-Regler zum Berechnen des Neigungsreferenzwerts aus dem Drehzahldifferenzwert verwendet wird.

6. Verfahren nach Anspruch 4 oder 5, bei dem
ein PID-Regler zum Berechnen des Pitch-Referenzwerts aus dem Neigungsdifferenzwert verwendet wird.

7. Verfahren nach einem der Ansprüche 4 bis 6, bei dem
der Neigungsreferenzwert auf einen gegebenen Wert festgelegt wird.

8. Verfahren nach Anspruch 7, bei dem
der gegebene Wert vom Wind abhängig ist.

9. Verfahren nach Anspruch 3 und einem der Ansprüche 4 bis 8, bei dem
der Neigungswert durch Bilden der Ableitung des Verhältnisses des Längsbeschleunigungswerts zur Erdbeschleunigung von dem Längsbeschleunigungswert abgeleitet wird.

10. Verfahren nach einem der Ansprüche 2 bis 9, bei dem
der Turmgeschwindigkeitswert aus einer tiefpassgefilterten Ableitung des Neigungswerts ermittelt wird.

11. Verfahren nach einem der Ansprüche 1 bis 10, bei dem
das Verfahren bei sehr hohen Windgeschwindigkeiten deaktiviert wird.

12. Verfahren nach einem der Ansprüche 1 bis 11, bei dem
der Neigungswert auf der Grundlage einer Neigungsmessung oder einer Beschleunigungsmessung an der Spitze des Turms ermittelt wird.

13. Neigungsregelsystem für die Verwendung bei einer Windenergieanlage (100) mit Rotorblättern und einem Pitch-Aktuatorsystem, wobei das Neigungsregelsystem Folgendes umfasst:
- eine Pitch-Regeleinheit (13), die so ausgelegt ist, dass sie ein Pitch-Referenzsignal ermittelt, das für einen von dem Pitch-Aktuatorsystem einzustellenden Anstellwinkel steht,
- einen Rotordrehzahleingang (1), der zum Empfangen eines Rotordrehzahlsignals ausgelegt ist, das für die Drehzahl des Rotors steht,
- einen Drehzahlreferenzeingang (3), der zum Empfangen eines Drehzahlreferenzsignals für die Rotordrehzahl ausgelegt ist,
- einen Neigungssignaleingang (5), der zum Empfangen eines Signals ausgelegt ist, das für eine Neigung des Turms steht,
- einen Pitch-Referenzausgang (7), der zum Ausgeben des Pitch-Referenzsignals ausgelegt ist,
**gekennzeichnet durch**
- eine Modifikationseinheit (9), die zum Empfangen des Drehzahlreferenzsignals mit dem Drehzahlreferenzeingang (1) und zum Empfangen des Neigungssignals mit dem Neigungssignaleingang (5) verbunden ist, wobei die Modifikationseinheit (9) so ausgelegt ist, dass sie auf der Grundlage des Neigungssignals ein Modifikationssignal ermittelt, das Drehzahlreferenzsignal mit Hilfe des Modifikationssignals modifiziert und ein modifiziertes Drehzahlreferenzsignal ausgibt,
- **dadurch**, dass die Pitch-Regeleinheit (13) mit der Modifikationseinheit (9) verbunden ist, um das modifizierte Drehzahlreferenzsignal zu empfangen, und so ausgelegt ist, dass sie das Pitch-Referenzsignal zumindest auf der Grundlage der Differenz zwischen dem modifizierten Drehzahlreferenzsignal und dem Rotordrehzahlsignal ermittelt, und
die Modifikationseinheit (9) so ausgelegt ist, dass sie als Modifikationssignal auf der Grundlage des Signals, das für eine Neigung des Turms steht, ein Turmgeschwindigkeitssignal ermittelt, das Drehzahlreferenzsignal **durch** Addieren des Turmgeschwindigkeitssignals zum Drehzahlreferenzsignal zum Ermitteln des modifizierten Drehzahlreferenzsignals modifiziert und das modifizierte Drehzahlreferenzsignal ausgibt.

14. Neigungsregelsystem nach Anspruch 13,
**dadurch gekennzeichnet, dass**
- die Modifikationseinheit (9) einen Differentiator (21) zum Differenzieren des Signals umfasst, das für eine Neigung des Turms steht, und
- die Modifikationseinheit so ausgelegt ist, dass sie das Turmgeschwindigkeitssignal auf der Grundlage des differenzierten Signals ermittelt.

15. Neigungsregelsystem nach Anspruch 14,
**dadurch gekennzeichnet, dass**
die Modifikationseinheit (9) einen Addierer (29) umfasst, der zum Empfangen des Drehzahlreferenzsignals mit dem Drehzahlreferenzeingang (3) verbunden und so ausgelegt ist, dass er zum Ermitteln des modifizierten Drehzahlreferenzsignals das Turmgeschwindigkeitssignal zu dem Drehzahlreferenzsignal addiert.

16. Neigungsregelsystem nach einem der Ansprüche 13 bis 15,
**dadurch gekennzeichnet, dass**
- eine erste Subtraktionseinheit (11), die zum Empfangen des modifizierten Drehzahlreferenzsignals mit der Modifikationseinheit (9) und zum Empfangen des Rotordrehzahlsignals mit dem Rotordrehzahlreferenzeingang (1) verbunden und so ausgelegt ist, dass sie ein Drehzahldifferenzsignal ermittelt, welches für die Differenz zwischen dem Rotordrehzahlsignal und dem modifizierten Drehzahlreferenzsignal steht,
- dass die Pitch-Regeleinheit (13) einen Drehzahlregler (15), eine zweite Subtraktionseinheit (19) und einen Neigungsregler (17) umfasst,
- dass der Drehzahlregler (15) zum Empfangen des Drehzahldifferenzsignals mit der ersten Subtraktionseinheit (1) verbunden und so ausgelegt ist, dass er auf der Grundlage des empfangenen Drehzahldifferenzsignals ein Neigungsreferenzsignal ermittelt und ausgibt,
- dass die zweite Subtraktionseinheit (19) zum Empfangen des für die Neigung stehenden Signals mit dem Neigungssignaleingang (5) verbunden und so ausgelegt ist, dass sie die Differenz zwischen dem Neigungsreferenzsignal und dem für die Neigung stehenden Signal ermittelt und ein Neigungsdifferenzsignal ausgibt, und
- dass der Neigungsregler (17) zum Empfangen des Neigungsdifferenzsignals mit der zweiten Subtraktionseinheit (19) verbunden und so ausgelegt ist, dass er auf der Grundlage des Neigungsdifferenzsignals das Pitch-Referenzsignal ermittelt.

17. Neigungsregelsystem nach Anspruch 16,
**dadurch gekennzeichnet, dass**
es sich bei dem Drehzahlregler (15) um einen PID-Regler handelt.

18. Neigungsregelsystem nach Anspruch 16 oder 17,
**dadurch gekennzeichnet, dass**
es sich bei dem Neigungsregler (17) um einen PID-Regler handelt.

19. Neigungsregelsystem nach Anspruch 14 und einem der Ansprüche 15 bis 18,
**dadurch gekennzeichnet, dass**
- die Modifikationseinheit (9) ein Tiefpassfilter (23) umfasst, das zum Empfangen des differenzierten Signals mit dem Differentiator (21) verbunden und so ausgelegt ist, dass es ein gefiltertes differenziertes Signal ausgibt.

## Revendications

1. Procédé d'amortissement de vibrations de tour d'une éolienne (100) qui est équipée avec des pales de rotor, un contrôleur (13) de pas et un système actionneur de pas, en réglant le pas des pales de rotor, comprenant les étapes de :
- prévision d'une valeur (3) de référence de vitesse pour la vitesse de rotor ;
- prévision d'une valeur (1) de vitesse de rotor représentant la vitesse du rotor (105) ; et
- établissement d'une valeur de modification représentant une modification devant être apportée à la valeur (3) de référence de vitesse pour prendre en compte les vibrations de tour ;
- utilisation de la valeur de modification pour modifier la valeur (3) de référence de vitesse pour établir une valeur de référence de vitesse modifiée ;
- détermination d'une valeur (7) de référence de pas représentant un pas devant être réglé par le système actionneur de pas sur la base d'au moins la différence entre la valeur de référence de vitesse modifiée et la valeur de vitesse de rotor ;
- contrôle de l'angle de pas des pales de rotor en fonction de la valeur (7) de référence de pas,
dans lequel
la valeur de modification est une valeur de vitesse de tour représentant la vitesse de tour causée par les vibrations de tour et la valeur de vitesse de tour est ajoutée à la valeur de référence de vitesse pour établir la valeur de référence de vitesse modifiée.

2. Procédé selon la revendication 1, dans lequel la valeur de vitesse de tour est calculée à partir d'une valeur d'inclinaison représentant l'inclinaison de la tour causée par les vibrations de tour.

3. Procédé selon la revendication 2, dans lequel une valeur d'accélération en va-et-vient représentant l'accélération de tour dans le sens de l'axe de rotor causée par les vibrations de tour est utilisée pour représenter l'inclinaison de la tour.

4. Procédé selon la revendication 2 ou la revendication 3, dans lequel le signal de référence de pas est déterminé sur la base de la valeur de référence de vitesse modifiée en
- établissant une valeur de différence de vitesse représentant la différence entre la valeur de vitesse de rotor et la valeur de référence de vitesse modifiée ;
- calculant une valeur de référence d'inclinaison pour la tour à partir de la valeur de différence de vitesse ;
- établissant une valeur de différence d'inclinaison représentant la différence entre la valeur d'inclinaison et la valeur de référence d'inclinaison ; et
- déterminant le signal de référence de pas sur la base de la valeur de différence d'inclinaison.

5. Procédé selon la revendication 4, dans lequel un contrôleur PID est utilisé pour calculer la valeur de référence d'inclinaison à partir de la valeur de différence de vitesse.

6. Procédé selon la revendication 4 ou la revendication 5, dans lequel
un contrôleur PID est utilisé pour calculer la valeur de référence de pas à partir de la valeur de différence d'inclinaison.

7. Procédé selon l'une quelconque des revendications 4 à 6, dans lequel
la valeur de référence d'inclinaison est bloquée sur une valeur donnée.

8. Procédé selon la revendication 7, dans lequel
la valeur donnée dépend du vent.

9. Procédé selon la revendication 3 et l'une quelconque des revendications 4 à 8, dans lequel
la valeur d'inclinaison est dérivée de la valeur d'accélération en va-et-vient en formant la dérivée du rapport de la valeur d'accélération en va-et-vient sur l'accélération due à la pesanteur.

10. Procédé selon l'une quelconque des revendications 2 à 9, dans lequel
la valeur de vitesse de tour est établie à partir d'une dérivée filtrée passe-bas de la valeur d'inclinaison.

11. Procédé selon l'une quelconque des revendications 1 à 10, dans lequel
le procédé est désactivé à des vitesses de vent très élevées.

12. Procédé selon l'une quelconque des revendications 1 à 11, dans lequel
la valeur d'inclinaison est établie sur la base d'une mesure d'inclinaison ou d'une mesure d'accélération au sommet de la tour.

13. Système de contrôle d'inclinaison destiné à une utilisation dans une éolienne (100) avec des pales de rotor et un système actionneur de pas, le système de contrôle d'inclinaison comprenant :
- une unité (13) de contrôle de pas qui est conçue pour établir un signal de référence de pas représentant un pas devant être réglé par le système actionneur de pas ;
- une entrée (1) de vitesse de rotor conçue pour recevoir un signal de vitesse de rotor représentant la vitesse du rotor ;
- une entrée (3) de référence de vitesse conçue pour recevoir un signal de référence de vitesse pour la vitesse de rotor ;
- une entrée (5) de signal d'inclinaison conçue pour recevoir un signal représentant une inclinaison de la tour ;
- une sortie (7) de référence de pas conçue pour délivrer en sortie le signal de référence de pas ;
**caractérisé en ce que**
- une unité (9) de modification qui est connectée à l'entrée (1) de référence de vitesse pour recevoir le signal de référence de vitesse et à l'entrée (5) de signal d'inclinaison pour recevoir le signal d'inclinaison, l'unité (9) de modification étant conçue pour établir un signal de modification sur la base du signal d'inclinaison, pour modifier le signal de référence de vitesse au moyen du signal de modification, et pour délivrer en sortie un signal de référence de vitesse modifié ;
- **en ce que** l'unité (13) de contrôle de pas est connectée à l'unité (9) de modification pour recevoir le signal de référence de vitesse modifié et conçue pour établir la valeur de référence de pas au moins sur la base de la différence entre le signal de référence de vitesse modifié et le signal de vitesse de rotor ; et
l'unité (9) de modification est conçue pour établir comme le signal de modification un signal de vitesse de tour sur la base du signal représentant une inclinaison de la tour, pour modifier le signal de référence de vitesse en ajoutant le signal de vitesse de tour au signal de référence de vitesse pour établir le signal de référence de vitesse modifié, et pour délivrer en sortie le signal de référence de vitesse modifié.

14. Système de contrôle d'inclinaison selon la revendication 13,
**caractérisé en ce que**
- l'unité (9) de modification comprend un différentiateur (21) pour différentier le signal représentant une inclinaison de la tour ; et
- l'unité de modification est conçue pour établir le signal de vitesse de tour sur la base du signal différentié.

15. Système de contrôle d'inclinaison selon la revendication 14,
**caractérisé en ce que**
l'unité (9) de modification comprend un additionneur (29) qui est connecté à l'entrée (3) de référence de vitesse pour recevoir le signal de référence de vitesse et conçu pour ajouter le signal de vitesse de tour au signal de référence de vitesse pour établir le signal de référence de vitesse modifié.

16. Système de contrôle d'inclinaison selon l'une quelconque des revendications 13 à 15,
**caractérisé en ce que**
- une première unité (11) de soustraction qui est connectée à l'unité (9) de modification pour recevoir le signal de référence de vitesse modifié et à l'entrée (1) de référence de vitesse de rotor pour recevoir le signal de vitesse de rotor, et qui est conçue pour établir un signal de différence de vitesse représentant la différence entre le signal de vitesse de rotor et le signal de référence de vitesse modifié ;
- **en ce que** l'unité (13) de contrôle de pas comprend un contrôleur (15) de vitesse, une deuxième unité (19) de soustraction et un contrôleur (17) d'inclinaison ;
- **en ce que** le contrôleur (15) de vitesse est connecté à la première unité (1) de soustraction pour recevoir le signal de différence de vitesse et conçu pour établir et pour délivrer en sortie un signal de référence d'inclinaison sur la base du signal de différence de vitesse reçu,
- **en ce que** la deuxième unité de soustraction est connectée à l'entrée (5) de signal d'inclinaison pour recevoir le signal représentant l'inclinaison et **en ce que** la deuxième unité (19) de soustraction est conçue pour établir la différence entre le signal de référence d'inclinaison et le signal représentant l'inclinaison et pour délivrer en sortie un signal de différence d'inclinaison ; et
- **en ce que** le contrôleur (17) d'inclinaison est connecté à la deuxième unité (19) de soustraction pour recevoir le signal de différence d'inclinaison et **en ce que** le contrôleur (17) d'inclinaison est conçu pour établir le signal de référence de pas sur la base du signal de différence d'inclinaison.

17. Système de contrôle d'inclinaison selon la revendication 16,
**caractérisé en ce que**
le contrôleur (15) de vitesse est un contrôleur PID.

18. Système de contrôle d'inclinaison selon la revendication 16 ou la revendication 17,
**caractérisé en ce que**
le contrôleur (17) d'inclinaison est un contrôleur PID.

19. Système de contrôle d'inclinaison selon la revendication 14 et l'une quelconque des revendications 15 à 18,
**caractérisé en ce que**
- l'unité (9) de modification comprend un filtre passe-bas (23) qui est connecté au différentiateur (21) pour recevoir le signal différentié et conçu pour délivrer en sortie un signal différentié filtré.
